# EUROPÄISCHE PATENTSCHRIFT

(11) **EP 3 151 650 B1**
(45) Veröffentlichungstag und Bekanntmachung des Hinweises auf die Patenterteilung: **09.12.2020**
(21) Anmeldenummer: 15726603.2
(22) Anmeldetag: 02.06.2015
(51) Int. Cl.: A01B 73/02

(54) **LANDWIRTSCHAFTLICHE HACKMASCHINE**
AGRICULTURAL CULTIVATOR
BINEUSE AGRICOLE

(30) Priorität: 03.06.2014 DE 202014102580 U
(43) Veröffentlichungstag der Anmeldung: 12.04.2017
(73) Patentinhaber: CNH Industrial Danmark A/S, 2620 Albertslund (DK)
(72) Erfinder: BROCKMÖLLER, Fritz, 29683 Fallingbostel (DE)
(74) Vertreter: Rasmussen, Martin Hoffgaard
(86) Internationale Anmeldenummer: PCT/EP2015/062239
(87) Internationale Veröffentlichungsnummer: WO 2015/185541

(56) Entgegenhaltungen:
- WO-A1-92/01363
- DE-A1- 1 782 641
- DE-A1- 4 220 913
- FR-A1- 2 258 114
- US-A- 4 452 318

## Beschreibung

Die Erfindung betrifft eine landwirtschaftliche Hackmaschine mit einem Rahmen, der in eine Transportrichtung selbstfahrend oder durch eine Zugmaschine in die Transportrichtung ziehbar ausgebildet ist, mit einem quer zur Transportrichtung verlaufenden Teil des Rahmens als Träger, mit mehreren einzeln montierbaren Hackelementen, die in Abständen nebeneinander an dem Träger positionierbar sind, wobei der Träger aus mehreren Trägerabschnitten aufgebaut ist und einen Klappmechanismus aufweist, der ein Aufeinanderklappen der Trägerabschnitte um parallel zur Transportrichtung verlaufende Klappachsen ermöglicht. Landwirtschaftliche Hackmaschinen sind seit langer Zeit bekannt. Hackmaschinen sind fahrbare landwirtschaftliche Geräte. Sie sind entweder selbstfahrend oder aber häufiger als Anhänger an eine Zugmaschine durch diese ziehbar ausgebildet. Sie sind mit Hackmessern ausgerüstet, die rotierend in den Boden eingreifen. Eine größere Zahl dieser Hackmesser oder Hackelemente oder Hackwerkzeuge ist nebeneinander (gesehen senkrecht zur Zugrichtung) an der landwirtschaftlichen Hackmaschine angebracht.

Bereits in der DE 805 821 C1 wird der Aspekt angesprochen, dass eine solche Hackmaschine auf verschiedene Arbeitsbreiten einstellbar sein sollte. Auf den zu bearbeitenden Feldern liegen die Reihen beziehungsweise Furchen, die mit den Hackelementen bearbeitet werden sollen, auch abhängig von der jeweiligen angebauten Pflanzenart in unterschiedlichen Abständen nebeneinander. Auch die Bodenbeschaffenheit des zu bearbeitenden Feldes kann bestimmte Abstände beim Anbau empfehlenswert werden lassen und die Hackmaschine soll durch den Anwender, insbesondere also den Landwirt, natürlich für alle seine Felder nutzbar sein, also auch für unterschiedliche Abstände der Pflanzenreihen.

In der DE 42 34 432 A1 wird ein Verfahren zum Regeln der relativen Position der Hackwerkzeuge einer landwirtschaftlichen Hackmaschine und eine Vorrichtung zu dessen Durchführung beschrieben. Dort werden die Hackwerkzeuge und ihre Position voreingestellt und eine Nachregelung der richtigen Einstellung wird mittels detektierbarer Körper im Ackerfeld vorgenommen, die dort zuvor eingebracht werden und einen vorbestimmten Abstand voneinander; aufweisen.

Die US-A-4 452 318 offenbart eine landwirtschaftliche Hackmaschine, die alle Merkmale des Oberbegriffs des Anspruchs 1 aufweist.

In den vergangenen Jahrzehnten ist noch ein weiterer praktischer Aspekt als Anforderung hinzugekommen, der von den modernen landwirtschaftlichen Hackmaschinen berücksichtigt werden muss. Während des Transportes von dem landwirtschaftlichen Unternehmen, beispielsweise einem Bauernhof, zu dem Feld, das bearbeitet werden soll, müssen landwirtschaftliche Wege oder Landstraßen benutzt werden. In beiden Fällen ist die Gesamtbreite, die eine landwirtschaftliche Hackmaschine besitzen darf, sehr beschränkt. Feldwege sind unter Umständen sehr schmal und auch auf Straßen dürfen bestimmte Breiten nicht überschritten werden. Die landwirtschaftliche Hackmaschine muss daher für den Transportweg üblicherweise auf eine Breite von etwa 3 m zusammenschiebbar oder zusammenfaltbar sein. In früheren Zeiten stellte dies noch kein Problem dar, da Hackmaschinen als solche auch auf dem Feld keine größere Breite besaßen. Das hat sich jedoch im Laufe der Zeit deutlich geändert, da heute schon aus wirtschaftlichen Gründen die gleichzeitige Bearbeitung von wesentlich größeren Flächen durch das gleiche Gerät in kürzerer Zeit wichtig ist. Es wird also erforderlich, dass die landwirtschaftliche Hackmaschine auf dem Feld während der Durchführung der Hackarbeiten eine Arbeitsbreite von beispielsweise 12 m besitzt, um dann eine 12 m breite Spur mit zahlreichen nebeneinander liegenden Reihen oder Furchen gleichzeitig bearbeiten zu können oder auch ein 12 m breites Feld beziehungsweise einen 12 m breiten Feldabschnitt komplett in einem Durchgang bearbeiten zu können.

Die landwirtschaftliche Hackmaschine kann dann dazu eingesetzt werden, Zuckerrüben-, Mais- oder Kartoffelfelder oder auch Felder mit anderen in Reihen zu pflanzenden Feldfrüchten zu bearbeiten. Die Bearbeitung besteht insbesondere darin, dass diese Felder durch den Hackvorgang von Unkraut befreit werden.

Damit dies nun geschehen kann, muss die Hackmaschine mit ihrer schmalen Transportbreite zum Feld verbracht und dort dann geeignet auf ihre Arbeitsbreite vergrößert werden. Danach muss dann eine Montage der Vielzahl von Hackelementen an der Hackmaschine auf dem Feld vorgenommen werden. Diese Hackelemente müssen dann alle in gleichen Abständen untereinander anbringbar sein, wobei die Größe dieses Abstandes dann vom Feldtyp abhängt. Durch diese Montage werden die Hackelemente jeweils so positioniert, dass jedes Hackelement genau auf oder konkret ausgedrückt genau neben einer Pflanzlinie entlangläuft und dort seine Arbeit verrichtet.

Erforderlich ist es also, dass die Hackmaschine geeignet von der Transportbreite auf eine Arbeitsgröße verbreiterbar ist. Es gibt zur Lösung dieser Problematik bereits Hackmaschinen, die einen Rahmen besitzen, der auf dem Feld eine Breite von 12 m erlaubt und für den Transportweg auf eine Breite von 3 m zusammenklappbar ist. Vorschläge für derartige Zusammenklappmechanismen gibt es ebenfalls.

Diese Zusammenklappmechanismen bringen natürlich zwingend mit sich, dass es innerhalb der Maximalbreite, also beispielsweise der 12 m, Stellen geben muss, an denen Teile des Rahmens in irgendeiner Form gefaltet werden und sich Winkel zwischen Rahmenabschnitten bilden und verändern.

Das führt dazu, dass die Hackelemente erst auf dem Feld an dem bereits ausgeklappten Rahmen montiert werden können, nämlich dann, wenn alle Falt-und Auffaltbewegungen bereits stattgefunden haben. Nach Beendigung der Arbeit der landwirtschaftlichen Hackmaschine auf dem Feld und vor dem Zusammenklappen des Rahmens sind dann die Hackelemente zu demontieren, dann der Rahmen zusammenzufalten und schließlich die landwirtschaftliche Hackmaschine wieder auf dem Transportweg zum landwirtschaftlichen Unternehmen zurückzufahren.

Montagetätigkeiten auf dem Feld sind jedoch von den Landwirten und anderen Nutzern weniger gewünscht. Regnerische Witterungsbedingungen erschweren dort die Tätigkeit. Darüber hinaus müssen entsprechende Montagewerkzeuge extra für diesen Zweck mit auf das Feld mitgeführt werden, um dort dann die Montagearbeiten vornehmen zu können. Unvorteilhaft ist auch, dass wertvolle Arbeitszeit bei Tageslicht auf dem Feld für die Montagearbeiten verloren geht.

Als Kompromiss wird von Landwirten häufig schon versucht, zumindest einige der Hackelemente an dem Rahmen schon unter den günstigeren Umständen im landwirtschaftlichen Unternehmen vorab zu montieren. Im Unternehmen gibt es üblicherweise entsprechende Scheunen oder andere Gebäude, in denen reichlich Werkzeug zur Verfügung steht und in denen diese Montagearbeiten auch bei künstlicher Beleuchtung und / oder schlechten Witterungsbedingungen problemlos im Trocknen bei ausreichender Beleuchtung vorgenommen werden können.

Natürlich muss dazu vor der Montage bekannt sein, auf welche Art Feld als Nächstes mit der landwirtschaftlichen Hackmaschine zur Durchführung der Tätigkeit gefahren werden soll und welche Abstände dort die einzelnen Pflanzenreihen voneinander haben. Diese Kenntnis liegt bei den landwirtschaftlichen Unternehmen aber im Allgemeinen vor. Gleichwohl kann nur eine kleine Auswahl der Hackelemente schon unter diesen günstigeren Umständen montiert werden, nämlich diejenigen, die sich bei einer entsprechenden Berechnung der Positionierung am Rahmen dort an Rahmenteilen befinden, die beim späteren Faltvorgang das Auseinanderklappen nicht behindern oder womöglich ohnehin zu nahe an den Faltstellen liegen.

Beschränkt sich der Landwirt aber auf diese Montage, so bleibt ein erheblicher Teil der benötigten Hackelemente nicht eingesetzt, was dann zu einer geringeren Effektivität der landwirtschaftlichen Hackmaschine während der Feldarbeit führt, denn eine Reihe von Pflanzenreihen bleiben komplett unbearbeitet.

Möchte man das aber vermeiden, so führt an einer Montage der weiteren Hackelemente unter Mitführung von Werkzeug und unter ungünstigen Witterungskonditionen kein Weg vorbei.

Es ist sogar schon vorgeschlagen worden, zur Vermeidung dieses Problems die Abstände der Pflanzenreihen auf die spätere Bearbeitung durch landwirtschaftliche Hackmaschinen abzustellen. Diese sehr künstliche Überlegung führt aber dazu, dass die Pflanzen nicht in dem Abstand voneinander gepflanzt werden können, der wirtschaftlich sinnvoll oder effektiv ist, was den Pflanzenwuchs und die Ausbeute an Feldfrüchten angeht. Es wäre bei einer solchen an den technischen Problemen der eingesetzten Hackmaschinen orientierten Vorgehensweise also möglich, aus dem gleichen Feld bei Anbau der gleichen Feldfrucht eigentlich eine höhere Ernte zu erzielen.

Diese bisherige Situation ist problematisch.

Aufgabe der Erfindung wäre es daher, einen Vorschlag für eine landwirtschaftliche Hackmaschine zu unterbreiten, die eine verbesserte Montagemöglichkeit für Hackelemente besitzt.

Diese Aufgabe wird bei einer gattungsgemäßen landwirtschaftlichen Hackmaschine gemäß der Erfindung dadurch gelöst, dass eine oder mehrere Montageschiene(n) vorgesehen sind, dass die Montageschiene(n) an dem Träger abnehmbar montierbar ist beziehungsweise sind, und dass die Hackelemente an der beziehungsweise den Montageschiene(n) montierbar sind. Weiterhin ist die Hackmaschine gekennzeichnet durch eine Auswahl von Montageschienen mit unterschiedlichen Längenabmessungen, die je nach dem in Aussicht genommenen Abstand der Hackelemente voneinander gerade eine geeignete Gesamtlänge besitzt.

Mit dieser überraschenden erfindungsgemäßen Lösung wird das Problem vollständig und elegant beseitigt.

Die neue Lösung stützt sich auf den Gedanken, die Hackmaschine mit einer oder mehreren abnehmbaren Montageschienen zum Anmontieren der Hackelemente auszustatten.

Diese Hackelemente, Hackwerkzeuge oder Hackmesser werden erfindungsgemäß nicht mehr direkt an der Hackmaschine beziehungsweise an dem Rahmen, der die Hackmaschine aufspannt, direkt montiert. Der Rahmen behält wie herkömmlich den Klappmechanismus und die weiteren Aggregate, die für die Funktion und die Ziehbarkeit relevant sind, also die Achse mit den Rädern, gegebenenfalls eine Anhängerdeichsel zum Anhängen an einen Traktor und auch etwaige Aggregate, die für ein motorisches Aufklappen sorgen.

Davon getrennt wird nun eine Montageeinrichtung vorgesehen, die aus einer durchgehenden Montageschiene oder auch aus mehreren zusammensetzbaren Montageschienen, die dann eine gemeinsame Montageeinrichtung bilden, besteht. Diese Montageeinrichtung ist dann entweder insgesamt oder auch in Form ihrer einzelnen Montageschienen an dem Rahmen montierbar, wobei Schnellmontagevorrichtungen vorgesehen werden können, um dies besonders einfach vornehmen zu können.

Diese Montageeinrichtung mit ihren ein oder mehreren Montageschienen ist so ausgebildet, dass die Hackelemente in jedem gewünschten Abstand vorab montiert werden können. Es gibt demzufolge Montageschienen, die eine Länge besitzen, die nicht an den jeweiligen Klappachsen enden. Das hat zur Folge, dass ein Hackelement an dieser Montageschiene befestigt werden kann, während dies herkömmlich bei einem Trägerabschnitt nicht möglich gewesen wäre, da ein Hackelement natürlich nicht auf eine Klappachse oder in deren näherer Umgebung montiert werden kann. Bei einer Montage auf eine Klappachse wäre völlig unbestimmt, wie sich das Hackelement bewegt bzw. es wäre gar nicht möglich, da der entsprechende Trägerabschnitt andernfalls mit dem benachbarten Trägerabschnitt während des Klappvorgangs interferieren würde und so ein Hackelement nicht tragen könnte.

Bei den Montageschienen wird einfach eine Auswahl mit unterschiedlichen Längenabmessungen bereit gehalten, die je nach dem in Aussicht genommenen Abstand der Hackelemente voneinander gerade eine geeignete Gesamtlänge besitzt.

Die Arbeit des Montierens der Hackelemente kann also der Landwirt oder anderweitige Nutzer der Hackmaschine zu einem ihm genehmen Zeitpunkt in seinem landwirtschaftlichen Unternehmen vornehmen. Dort steht ihm jedes beliebige Werkzeug zur Verfügung und diese Arbeit kann auch bei schlechter Witterung und ungünstigen Sichtverhältnissen innerhalb einer Scheune oder anderen geeigneten Werkstatt vorgenommen werden.

Diese fertig vormontierten Montageschienen samt den darauf befestigten Hackelementen werden dann während des Transports der Hackmaschine mittels etwa eines Zugfahrzeugs oder auch selbstfahrend mitgenommen. Während dieses Transportes ist die Hackmaschine selbst wie erwähnt zusammengeklappt und hat daher nur eine vergleichsweise geringe Transportbreite.
Die Montageeinrichtung kann entweder aufgrund einer ähnlichen Breite einfach auf dem Gerät mit transportiert werden oder, wenn es sich um eine Ausführungsform mit nur einer Montageschiene von dann erheblich größerer Länge handelt, kann diese in Längsrichtung bezogen auf die Transportrichtung oder auch separat mitgenommen werden.

Angekommen auf dem zu bearbeitenden Feld wird dort der Rahmen beziehungsweise die Trägerabschnitte aufgeklappt und so die Arbeitsbreite erreicht. Mit wenigen Handgriffen können dann die vormontierten Montageschienen beziehungsweise die Montageeinrichtung mit allen Hackelementen in einem Zuge am Rahmen beziehungsweise den Trägerabschnitten montiert werden und die Bearbeitung des Feldes kann somit beginnen.

Nach der Bearbeitung des Feldes können die Montageschienen mit den daran angebrachten Hackelementen demontiert werden, sodass problemlos die Trägerabschnitte des Rahmens wieder zusammengeklappt und anschließend die gesamte Hackmaschine mit den Montageschienen wieder auf einem Feldweg beziehungsweise auf Landstraßen zurück ins landwirtschaftliche Unternehmen transportiert werden kann.

Es ist alternativ auch noch eine andere, noch mehr zeitsparende Vorgehensweise mit der erfindungsgemäßen Technik möglich. Bei der Vorbereitung der Hackmaschine noch im landwirtschaftlichen Unternehmen ist bereits bekannt, welchen Abstand voneinander die zu bearbeitenden Pflanzreihen auf dem Feld haben werden. Man kann jetzt aus beispielsweise einem Satz von etwa einem Dutzend Montageschienen diejenigen heraussuchen, die bereits bei einer Vormontage auf dem Rahmen gerade keine Probleme mit einer Kollision oder einer gegenseitigen Störung während des Klappvorgangs haben werden. Diese Montageschienen mit den darauf schon angebrachten Hackelementen können dann vollständig auch bereits im landwirtschaftlichen Unternehmen unter günstigen Arbeitsbedingungen vormontiert werden. Ein nahezu vollständiges Anbringen wird auf diese Weise möglich, wenn die Montageschienen so ausgewählt und vorbereitet sind, dass ihre Breite ungefähr auch der Breite der Trägerabschnitte entspricht und ihre Zahl ebenfalls so groß ist wie die Zahl der Trägerabschnitte. Man nimmt stets einen Satz Montageschienen, bei denen gerade keine Hackelemente an den Übergangsstücken der Trägerabschnitte sitzen. Die leicht abweichenden Abmessungen bestimmter Montageschienen sind dann genau dazu geeignet, wiederum eine passende Gesamtabmessung zu erreichen.

Da es in der Praxis der Landwirtschaft nur eine bestimmte, relativ eng bemessene Zahl in Betracht kommender Pflanzabstände von Pflanzreihen gibt, die bei üblichen Pflanzen wie Zuckerrüben, Kartoffeln oder Mais in Betracht kommen, ist auch die Zahl der möglicherweise in Betracht kommenden Schienenkonstellationen gering. Die Zahl der aus diesen Gründen bereitzuhaltenden Montageschienen ist daher ebenfalls sehr eng begrenzt.

Ein passender Satz Montageschienen wird also verwendet und dann entweder schon im landwirtschaftlichen Unternehmen montiert oder auf das Feld mitgeführt und dann dort einfach montiert. Schon gibt es eine problemlose Verwendung auch bei aufklappbaren Hackmaschinen.

Damit ist durch eine sehr einfache und kostengünstige Maßnahme das Problem insgesamt gelöst.

Besonders bevorzugt ist es, wenn eine optische Steuerungseinrichtung vorgesehen ist, welche die Transportrichtung stets parallel zu einem Pflanzstreifen auf einem Feld hält. Mit einer derartigen Maßnahme lässt sich das Verhalten der landwirtschaftlichen Hackmaschine weiter optimieren.

Weitere Merkmale der Erfindung sind in den Unteransprüchen und in der folgenden Figurenbeschreibung näher erläutert.

Im Folgenden wird anhand der Zeichnung ein Ausführungsbeispiel der Erfindung näher erläutert. Es zeigen:
- **Figur 1**: eine Draufsicht auf eine Zugmaschine mit einer Ausführungsform einer erfindungsgemäßen landwirtschaftlichen Hackmaschine;
- **Figur 2**: eine perspektivische schematische Darstellung eines vergrößerten Teilbereichs einer Ausführungsform einer erfindungsgemäßen landwirtschaftlichen Hackmaschine;
- **Figur 3**: eine Ansicht des Teilbereichs der landwirtschaftlichen Hackmaschine aus Figur 2.

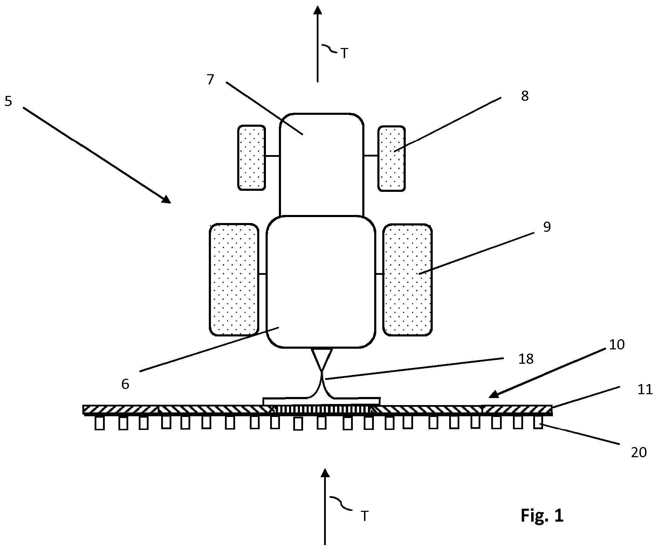

In der **Figur 1** ist von oben in Draufsicht eine landwirtschaftliche Zugmaschine 5 zu erkennen. Die landwirtschaftliche Zugmaschine 5 bewegt sich in eine Transportrichtung T. Sie besitzt eine Fahrerkabine 6, in der sich ein Landwirt oder anderer Nutzer aufhält und den Fahrvorgang steuert und gegebenenfalls auch spezielle Vorgänge kontrolliert, die sich mit den an der Zugmaschine 5 angehängten weiteren Aggregaten vornehmen lassen. Vor der Fahrerkabine 6 in Fahrtrichtung befindet sich eine Motorhaube 7. Die Zugmaschine 5 läuft auf Rädern, nämlich zwei Vorderrädern 8 und zwei Hinterrädern 9.

Die landwirtschaftliche Zugmaschine 5 kann in einer Ausführungsform auch ferngesteuert arbeiten, also ohne einen Fahrer in der Fahrerkabine 6.

Die Zugmaschine 5 zieht eine landwirtschaftliche Hackmaschine mit einem Rahmen 10. Der Rahmen 10 ist über einen Anhängemechanismus 18 mit der Zugmaschine 5 verbunden. In einer nicht dargestellten Ausführungsform kann die Hackmaschine auch selbstfahrend ausgebildet sein.

Am Rahmen 10 befinden sich neben weiteren hier nicht interessierenden und daher nicht dargestellten Aggregaten wie etwa einem Motor für einen Klappmechanismus auch ein Träger 11. Der Träger 11 kann ein Teil des Rahmens 10 und mit diesem einstückig ausgeführt sein, ebenso aber auch kann er ein separates Element sein. An diesem Träger 11 sind Hackelemente 20 positioniert. Diese Hackelemente 20 sind nur schematisch angedeutet. Es handelt sich um Hackwerkzeuge oder Hackmesser zur Bodenbearbeitung, insbesondere zum Entfernen von Unkraut beziehungsweise nicht gewünschten Pflanzen benachbart zu Pflanzreihen von Nutzpflanzen auf einem zu bearbeitenden Feld.

Die Darstellung in der Figur 1 ist rein schematisch. Die Zugmaschine 5 ist in der Lage, eine Hackmaschine in einem zusammengefalteten Zustand des Rahmens 10 auf öffentlichen Straßen beziehungsweise Feldwegen zu ziehen. In diesem Falle ist dann die Hackmaschine mit dem Rahmen 10 nicht wesentlich breiter als die Zugmaschine 5 selbst.

Auf einem zu bearbeitenden Feld dagegen ist die Arbeitsbreite der Hackmaschine mit dem Rahmen 10 wesentlich breiter als in der Figur 1 dargestellt.

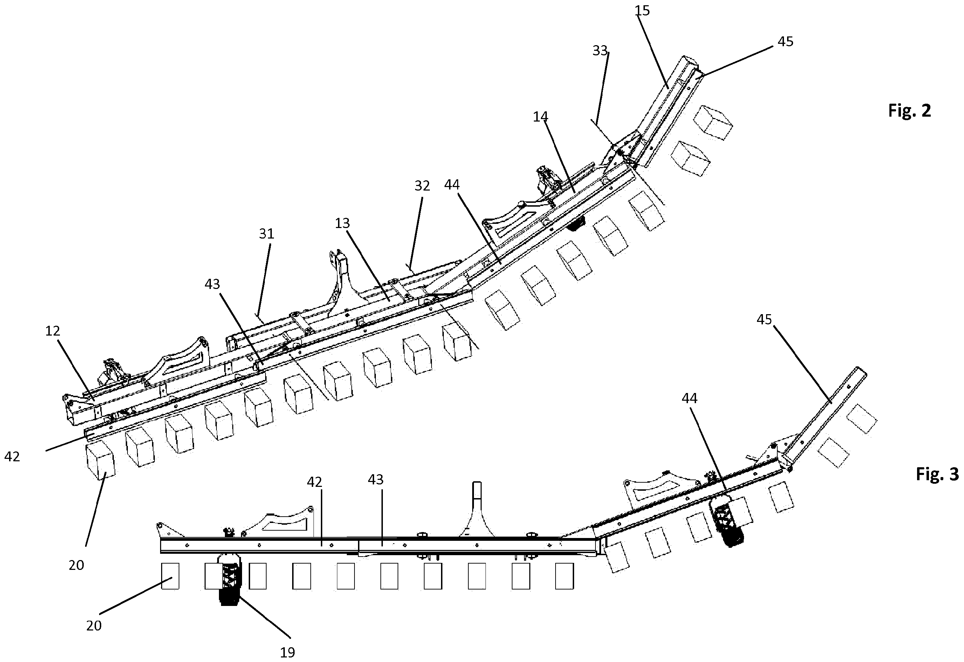

In der **Figur 2** ist eine perspektivische schematische Darstellung eines Teilbereichs der landwirtschaftlichen Hackmaschine mit dem Rahmen 10 zu erkennen. Man sieht insbesondere den Träger 11, der hier aus den vier Trägerabschnitten 12, 13, 14 und 15 besteht. Diese sind mittels eines Klappmechanismus 30 um drei Klappachsen 31, 32 und 33 klappbar. Diese Klappachsen befinden sich jeweils zwischen zwei aufeinander folgenden Trägerabschnitten, die Klappachse 31 also zwischen den Trägerabschnitten 12 und 13, die Klappachse 32 zwischen den Trägerabschnitten 13 und 14, und die Klappachse 33 zwischen den Trägerabschnitten 14 und 15.

Natürlich ist es auch möglich, dass mehr oder weniger Trägerabschnitte 12, 13, 14 und 15 vorgesehen sind, wodurch dann mehr oder weniger Klappachsen 31, 32 und 33 benötigt werden.

In der Figur 2 ist der Klappvorgang als teilweise durchgeführt und im Gange angedeutet. So sind hier die beiden Trägerabschnitte 12 und 13 noch nicht in irgendeiner Form geklappt. Nach dem weiteren Fortschreiten des Klappvorgangs sind dann alle Trägerabschnitte 12, 13, 14 und 15 auseinandergeklappt, so dass die Gesamtbreite der entstehenden Konfiguration die Breite eines dieser Trägerabschnitte nicht mehr wesentlich überschreitet.

Bevorzugt sind in der Tat wie dargestellt vier Trägerabschnitte 12, 13, 14 und 15 mit jeweils ungefähr gleicher Breite vorgesehen.

Wie bereits in der Figur 1 angedeutet sind auch in der Figur 2 Hackelemente 20 vorgesehen, auch hier nur schematisch angedeutet. Diese sind in etwa gleichen Abständen vor dem Träger mit den Trägerabschnitten 12, 13, 14 und 15 positioniert. Dies entspricht den ebenfalls üblicherweise identischen und konstanten Abständen, die die Pflanzreihen auf einem Feld voneinander besitzen, also beispielsweise jeweils 55 cm voneinander entfernt nebeneinander. Man sieht, das bei einer herkömmlichen Montage diese Hackelemente 20 direkt an den Träger beziehungsweise an den Trägerabschnitten 12, 13, 14 und 15 automatisch einige der Hackelemente 20 genau oder ziemlich genau auf die Klappachsen 31, 32, und 33 montiert werden müssten, was automatisch das Zusammenfalten verhindert oder jedenfalls blockiert.

Erfindungsgemäß ist daher eine Montageeinrichtung 40 mit Montageschienen 42, 43, 44 und 45 vorgesehen. Die Hackelemente 20 können nun bereits im Landwirtschaftsunternehmen unter Werkstattbedingungen an dieser Montageeinrichtung beziehungsweise an den Montageschienen montiert werden. Die Montageschienen mit den daran montierten Hackelementen 20 können dann während der Fahrt mit der Zugmaschine 5 und der landwirtschaftlichen Hackmaschine mit dem Rahmen 10 mittransportiert werden oder durch eine geschickte Auswahl der entsprechenden Montageschienen 42, 43, 44 und 45 auch schon an den Trägerabschnitten 12, 13, 14 und 15 montiert werden, indem nämlich Montageschienen mit Längenabmessungen so ausgewählt werden, dass sie die Hackelemente 20 aufnehmen können, ohne dass es an den Zusammenstoßpunkten zu Problemen kommt, und diese dann geeignet auf die klappbaren Trägerabschnitte montiert werden.

Jedenfalls sind keine umständlichen Montagemaßnahmen von einer Vielzahl einzelner Hackelemente mehr erforderlich.

In der **Figur 3** ist die Konstellation aus der Figur 2 von der Seite beziehungsweise von hinten gesehen auf die landwirtschaftliche Hackmaschine hinter der Zugmaschine 5. Man sieht wiederum die Hackelemente 20 hinter beziehungsweise unterhalb der Montageschienen 42, 43, 44 und 45. Es ist ähnlich wie in der Figur 2 gerade ein Zusammenklappvorgang angedeutet. Man sieht auch, dass die Montageschienen 42, 43, 44 und 45 zwar ungefähr die gleiche Abmessung besitzen, nicht jedoch identisch die gleiche Abmessung. Ebenso sieht man, dass die Hackelemente 20 auch dort, wo sie an sich mit den Klappachsen 31, 32 und 33 zusammenfallen würden durch die unterschiedlichen Abmessungen der Montageschienen den dadurch verursachten Problemen aus dem Wege gehen.

### Bezugszeichenliste

- 5: Zugmaschine
- 6: Fahrerkabine
- 7: Motorhaube
- 8: Vorderrad
- 9: Hinterrad

- 10: Rahmen
- 11: Träger
- 12: Trägerabschnitt
- 13: Trägerabschnitt
- 14: Trägerabschnitt
- 15: Trägerabschnitt
- 18: Anhängemechanismus
- 19: Rad

- 20: Hackelement

- 30: Klappmechanismus
- 31: Klappachse
- 32: Klappachse
- 33: Klappachse

- 40: Montageeinrichtung
- 42: Montageschiene
- 43: Montageschiene
- 44: Montageschiene
- 45: Montageschiene

## Patentansprüche

1. Landwirtschaftliche Hackmaschine
mit einem Rahmen (10), der in eine Transportrichtung (T) selbstfahrend oder durch eine Zugmaschine (5) in die Transportrichtung (T) ziehbar ausgebildet ist,
mit einem quer zur Transportrichtung (T) verlaufenden Teil des Rahmens (10) als Träger (11),
mit mehreren einzeln montierbaren Hackelementen (20), die in Abständen nebeneinander an dem Träger (11) positionierbar sind,
wobei der Träger (11) aus mehreren Trägerabschnitten (12, 13, 14, 15) aufgebaut ist und einen Klappmechanismus (30) aufweist, der ein Aufeinanderklappen der Trägerabschnitte (12, 13, 14, 15) um parallel zur Transportrichtung (T) verlaufende Klappachsen (31, 32, 33) ermöglicht,
wobei eine oder mehrere Montageschiene(n) (42, 43, 44, 45) vorgesehen sind,
wobei die Montageschiene(n) (42, 43, 44, 45) an dem Träger (11) abnehmbar montierbar ist beziehungsweise sind, und
wobei die Hackelemente (20) an der beziehungsweise den Montageschiene(n) (42, 43, 44, 45) montierbar sind, und die landwirtschaftliche Hackmaschine ist **gekennzeichnet durch** eine Auswahl von Montageschienen mit unterschiedlichen Längenabmessungen, die je nach dem in Aussicht genommenen Abstand der Hackelemente voneinander gerade eine geeignete Gesamtlänge besitzt.

2. Landwirtschaftliche Hackmaschine nach Anspruch 1,
**dadurch gekennzeichnet,**
**dass** die Zahl der Montageschienen (42, 43, 44, 45) der Zahl der Trägerabschnitte (12, 13, 14, 15) am Rahmen (10) entspricht, und
**dass** je eine Montageschiene (42, 43, 44, 45) an je einem Trägerabschnitt (12, 13, 14, 15) abnehmbar montierbar ist.

3. Landwirtschaftliche Hackmaschine nach Anspruch 1 oder 2,
**dadurch gekennzeichnet,**
**dass** die Breite der Trägerabschnitte (12, 13, 14, 15) und die Breite der Montageschienen (42, 43, 44, 45) zwischen 2 Meter und 4 Meter liegt.

4. Landwirtschaftliche Hackmaschine nach einem der vorstehenden Ansprüche, **dadurch gekennzeichnet,**
**dass** eine optische Steuerungseinrichtung vorgesehen ist, welche die Transportrichtung (T) stets parallel zu einem Pflanzstreifen auf einem Feld hält.

## Claims

1. Agricultural cultivator,
having a frame (10) which is designed to be self-propelled in a transport direction (T) or to be pullable by a tractor (5) in the transport direction (T),
having a part of the frame (10) running transversely to the transport direction (T) as a support (11),
having a plurality of individually mountable cultivator elements (20), which can be positioned side by side and spaced from one another on the support (11),
wherein the support (11) is constructed from a plurality of support sections (12, 13, 14, 15) and has a folding mechanism (30) which enables the support sections (12, 13, 14, 15) to be folded onto one another about folding axes (31, 32, 33) running parallel to the transport direction (T),
wherein one or more mounting rails (42, 43, 44, 45) are provided,
wherein the mounting rail(s) (42, 43, 44, 45) can be removably mounted on the support (11), and
wherein the cultivator elements (20) can be removably mounted on the mounting rail(s) (42, 43, 44, 45),
and the agricultural cultivator is **characterised by** a selection of mounting rails having different length dimensions, which selection has just a suitable overall length depending on the envisaged spacing of the cultivator elements from one another.

2. Agricultural cultivator according to claim 1,
**characterised in that**
the number of mounting rails (42, 43, 44, 45) corresponds to the number of support sections (12, 13, 14, 15) on the frame (10), and
**in that** one mounting rail (42, 43, 44, 45) can be removably mounted on each support section (12, 13, 14, 15).

3. Agricultural cultivator according to claim 1 or 2,
**characterised in that**
the width of the support sections (12, 13, 14, 15) and the width of the mounting rails (42, 43, 44, 45) is between 2 metres and 4 metres.

4. Agricultural cultivator according to any of the preceding claims,
**characterised in that**
an optical control device is provided which keeps the transport direction (T) constantly parallel to a row of plants in a field.

## Revendications

1. Bineuse agricole comportant un cadre (10) qui est automoteur dans un sens de transport (T) ou conçu pour pouvoir être tiré par une machine de traction (5) dans le sens de transport (T),
avec une partie du cadre (10) évoluant transversalement par rapport au sens de transport (T) en tant que support (11),
avec plusieurs éléments de binage (20) pouvant être montés individuellement, qui peuvent être positionnés côte à côte à distances les uns des autres sur le support (11),
dans laquelle le support (11) est constitué de plusieurs sections de support (12, 13, 14, 15) et présente un mécanisme de repli (30) qui permet un rabattement des sections de support (12, 13, 14, 15) autour d'axes de replis (31, 32, 33) évoluant parallèlement au sens de transport (T),
dans laquelle un ou plusieurs rail(s) de montage (42, 43, 44, 45) sont prévus,
dans laquelle le(s) rail(s) de montage (42, 43, 44, 45) peut ou peuvent être monté(s) de façon amovible sur le support (11), et
dans laquelle les éléments de binage (20) peuvent être montés sur le(s) rail(s) de montage (42, 43, 44, 45),
et la bineuse agricole est **caractérisée par** un choix de rails de montage ayant des longueurs différentes qui possède justement une longueur totale appropriée en fonction de la distance prévue des éléments de binage les uns par rapport aux autres.

2. Bineuse agricole selon la revendication 1,
**caractérisée en ce que**
le nombre de rails de montage (42, 43, 44, 45) correspond au nombre de sections de support (12, 13, 14, 15) sur le cadre (10), et
**en ce que** respectivement un rail de montage (42, 43, 44, 45) peut être monté de façon amovible sur respectivement une section de support (12, 13, 14, 15).

3. Bineuse agricole selon la revendication 1 ou 2,
**caractérisée en ce que**,
la largeur des sections de support (12, 13, 14, 15) et la largeur des rails de montage (42, 43, 44, 45) se situent entre 2 mètres et 4 mètres.

4. Bineuse agricole selon l'une quelconque des revendications précédentes,
**caractérisée en ce que**
un dispositif de commande optique est prévu, lequel maintient le sens de transport (T) toujours parallèle à une bande de plantes dans un champ.
